# EUROPÄISCHE PATENTSCHRIFT

(11) **EP 1 462 035 B1**
(45) Veröffentlichungstag und Bekanntmachung des Hinweises auf die Patenterteilung: **10.11.2010**
(21) Anmeldenummer: 04000324.6
(22) Anmeldetag: 09.01.2004
(51) Int. Cl.: A47F 1/12

(54) **Warenpräsentationsvorrichtung**
Goods display apparatus
Dispositif de présentation de marchandises

(30) Priorität: 28.03.2003 DE 20305158 U
(43) Veröffentlichungstag der Anmeldung: 29.09.2004
(73) Patentinhaber: Vosshenrich, Udo, 32107 Bad Salzuflen (DE)
(72) Erfinder: Vosshenrich, Udo, 32107 Bad Salzuflen (DE)
(74) Vertreter: Holland, Ralf

(56) Entgegenhaltungen:
- WO-A-03/005862
- DE-U1- 20 018 680
- US-A- 4 901 869

## Beschreibung

Die Erfindung betrifft eine Warenpräsentationsvorrichtung mit einem für die Bewegung des Warenschiebersführungsschienenfreien Warenschieber für auf einem Regalboden hintereinander gestapelte Warenverpackungen mit einem Warenschiebergehäuse mit einer darin aufgerollt und aus einem Federauslass ausziehbar gelagerten Zugfeder und einer Schubplatte, mit einem Frontanker zur Fixierung an einer Frontschiene oder Frontsicke eines Regalbodens, an dem das vordere Ende der Zugfeder festgelegt ist, sowie mit variablen Fachteilern mit eigenen Frontankern.

Ein solcher Warenschieber ist bekannt, DE 298 03 296 U1, der jedoch den Nachteil aufweist, dass das Warenschiebergehäuse nach Entnahme der letzten Warenverpackung in Richtung auf den Frontanker nach vorn abknickt, wobei eine solche Position für den optischen Eindruck eines Warenpräsentationssystems wenig förderlich ist, ebenso wie eine solche abgeknickte Position das Auffüllen des Regals mit neuer Ware behindert. Nachteilig an dem bekannten Warenschieber ist weiterhin, dass im entleerten Zustand des Warenschiebers dessen Technik sichtbar wird, was der erfolgreichen Präsentation von Waren ebenfalls entgegensteht. Weiterhin können bekannte seitliche Fachteiler durch eine zu enge Montage zu Funktionsstörungen der Warenpräsentationsvorrichtung führen, wohingegen eine zu weite Montage Präsentationsfläche verschwendet und eine präzise Bestückung von Warenträgern behindert.

Aufgabe der Erfindung ist es, eine verbesserte Warenpräsentationsvorrichtung zur Verfügung zu stellen, die in jedem Betriebszustand ein optimales Erscheinungsbild aufweist, die das Auffüllen eines Regalbodens wesentlich erleichtert und die Funktionsstörungen verhindert.

Die Lösung dieser Aufgabe ergibt sich in Verbindung mit den Oberbe- griffsmerkmalen erfindungsgemäß durch die Merkmale des kennzeichnenden Teils des Hauptanspruches sowie den nachfolgenden Unteransprüchen.

Dadurch, dass die Schubplatte des Warenschiebergehäuses mit einer Labelhalterung aus klarsichtigem Material ausgestattet ist, hinter dem ein Label der darin angebotenen und zum Abverkauf bevorrateten Warenverpackungen angeordnet ist wird erreicht, dass ein Label zum Beispiel mit Angaben über die zu platzierende Ware werblich wirksam und zur Vereinfachung der Nachbestückung deutlich gezeigt werden kann, ebenso wie das gesamte Warenschiebergehäuse hinter dem Label für vor einem Präsentationsregel stehende Konsumenten quasi unsichtbar wird. Weiterhin wird dadurch, dass sich vom Frontanker und/ oder umgekehrt vom Warenschiebergehäuse ein Fortsatz in Richtung des anderen Hauptbestandteils des Warenschiebers erstreckt und dort eine Aufnahme für den Fortsatz angeordnet ist, in die dieser im warenverpackungsfreien Zustand des Warenschiebers eingreift erreicht, dass das gesamte Warenschiebergehäuse und damit auch die Schubplatte und das Label mit der Labelhalterung in einer gewünschten, vorzugsweise etwa rechtwinkeligen Position zu einem Regalboden gehalten werden kann.

Weitere vorteilhafte Ausgestaltungen des Gegenstandes der Erfindung ergeben sich mit und in Kombination der weiteren Schutzansprüche.

Besonders vorteilhaft ist die einfache Ausführungsform der Labelhalterung als eine die nach vorn gerichtete Seite der Schubplatte überdeckende und diese rechts- und linksseitig umgreifende Konstruktion, die es erlaubt, die Labelhalterung von oben auf die Schubplatte aufzuschieben.

Gemäß einer besonders bevorzugten Ausführungsform des Gegenstandes der Erfindung besteht die Labelhalterung aus einem Profilabschnitt aus durchsichtigem Kunststoff, sodass beliebig hohe Labelhalterungen durch einfaches Ablängen von einem entsprechenden Profilstrang hergestellt werden können.

Als vorteilhafte Variante weist dieses Profil zwei C-Profil-förmige Ausformungen als Verstärkungen und/oder Aufnahmen für weiteres Zubehör für die Warenpräsentation, die Sicherheit oder der Revision auf, beispielweise Geräuschquellen wie etwa Glöckchen, welche bewirken, dass nach Entnahme einer Packung ein Geräusch generiert wird, was insbesondere bei vielen Diebstahl gefährdeten Produkten wie etwa Rasierklinken und Kleinspirituosen wünschenswert ist. Weiterhin können in diese C-Profil-förmigen Ausformungen nach oben hervorstehende Fahnen oder Flächen eingesteckt werden, welche beispielsweise mit einem Barcode bedruckt werden können, die etwa den Strahl einer Lichtschranke aufnehmen können, um die Position des Warenschiebers, den Inhalt bzw. die Restmenge oder den getätigten Abverkauf oder sonstige Informationen an einen Rechner weiterzuleiten. Ein weiterer vorteilhafter Effekt dieser C-Profil-förmigen Verstärkungen ist die gesteigerte mecha-nische Festigkeit, die es erlaubt, auch hohen Warendruck sicher abzufangen und in das Warenschiebergehäuse abzuleiten.

Zur einfacheren Montage der Labelhalterung und des Labels ist die Schubplatte an ihrem oberen Ende vorzugsweise mit einer Abschrägung versehen.

Als besonders vorteilhaft ist eine Ausführungsform des erfinderischen Warenschiebers anzuführen, deren Fortsatz als Zunge am Frontanker ausgebildet ist und deren Federauslass des Warenschiebergehäuses als Aufnahme für diese Zunge fungiert. An der Zunge ist des Weiteren vorteilhafter Weise ein Keil angeordnet, welcher größer ist als der Federauslass hoch, sodass gewährleistet werden kann, dass der Warenschieber nach Entnahme der letzten Packung nicht nach vorn abknicken kann, da er von der Feder auf den Keil gezogen wird. Dadurch wird erreicht, dass das in die Labelhalterung eingesteckte oder anderweitig an der Schubplatte des Warenschiebergehäuses befestigte Label in einer "out of stock-Situation" trotzdem klar und werbewirksam erkannt werden kann. Nach Entnahme der letzten Warenverpackung erfolgt quasi eine Verzahnung zwischen dem Frontanker und dem Federauslass des Warenschiebergehäuses, wobei die am Frontanker befindliche Zunge, die in den Federauslass des Warenschiebergehäuses eindringt bewirkt, dass das Warenschiebergehäuse auch nach Entnahme der letzten Warenverpackung aufrecht stehen bleibt. Hierdurch bleibt die am Warenschiebergehäuse aufgebrachte Labelung optimal sichtbar. Zudem ist eine solche Position des Warenschiebers für das Auffüllen eines Regals mit neuer Ware vorteilhaft.

Gemäß einer besonders vorteilhaften Ausführungsform des Gegenstandes der Erfindung sind die Frontanker des Warenschiebers und/oder die Frontanker der Fachteiler der erfindungsgemäßen Warenpräsentations-vorrichtung mit sich seitlich erstreckenden Distanzhaltern ausgestattet, sodass eine Mindestfachbreite festlegbar ist, wobei die maximale Fachbreite unbegrenzt bleibt. Bei gleichen Produktbreiten, wie z.B. bei Zigarettenschachteln, kann dadurch eine präzise Bestückung von Warenträgern schneller vorgenommen werden. Gleichzeitig werden Funktionsstörungen des Warenvorschubs, die etwa durch zu enge Fächer hervorgerufen werden könnten, von vorne herein wirkungsvoll ausgeschlossen.

Entsprechend einer weiteren bevorzugten Weiterentwicklung sind zwischen einem Frontanker und einem Distanzhalter und/ oder in einem Distanzhalter Sollbruchstellen vorgesehen, sodass ein Distanzhalter oder Teile von diesem leicht abtrennbar ausgebildet sind und eine schmalere Mindestfachbreite herstellbar ist.

Nachfolgend wird ein Ausführungsbeispiel der Erfindung anhand der Zeichnungen näher beschrieben. Es zeigen:

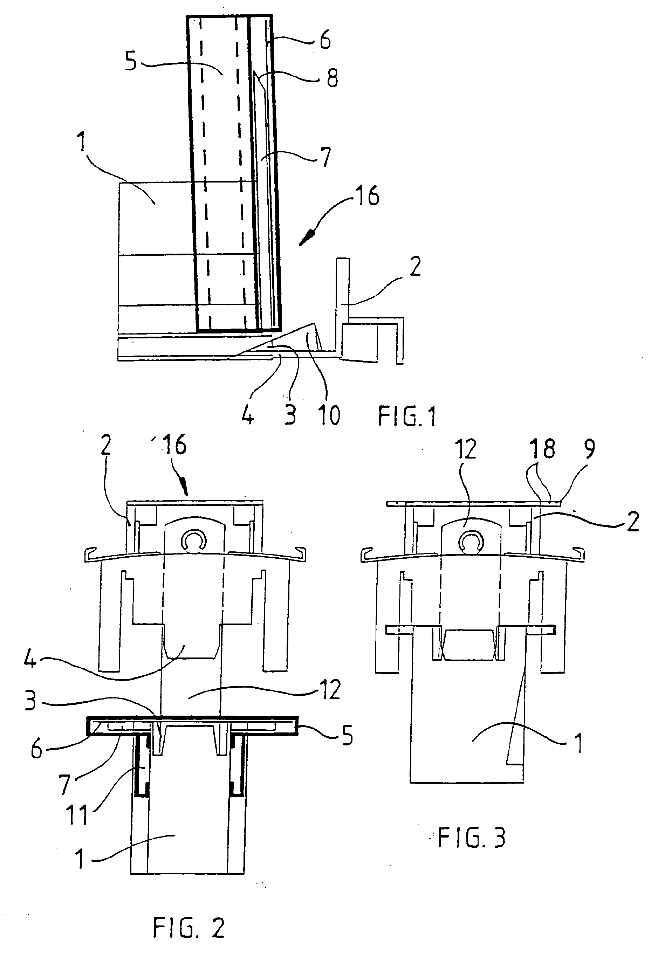

- Fig. 1: eine Seitenansicht eines warenverpackungsfreien Warenschiebers,
- Fig. 2: eine Draufsicht auf einen Warenschieber mit geringfügig aus dem Warenschiebergehäuse ausgezogenen Zugfeder,
- Fig. 3: eine Draufsicht auf den Warenschieber gemäß Fig. 1,

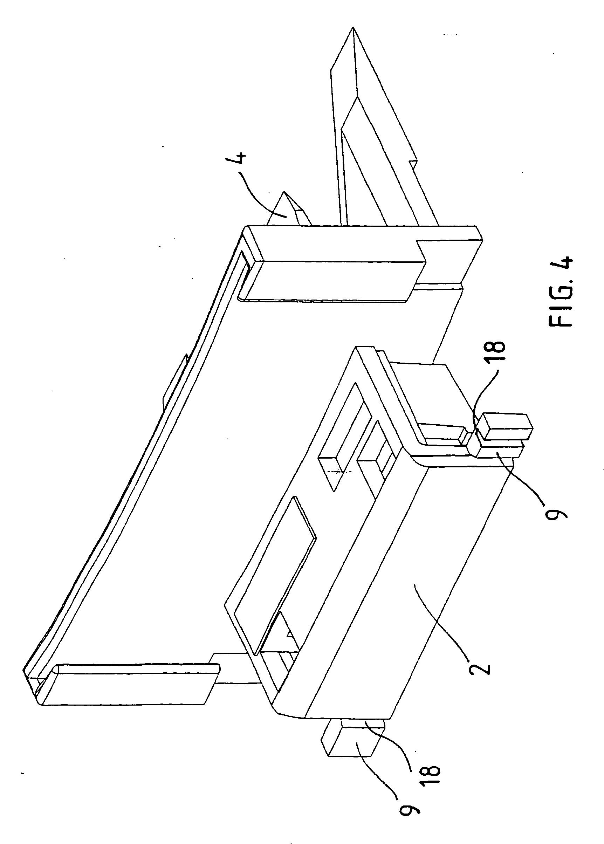

- Fig. 4: eine 3-D-Ansicht eines Frontankers eines Warenschiebers und

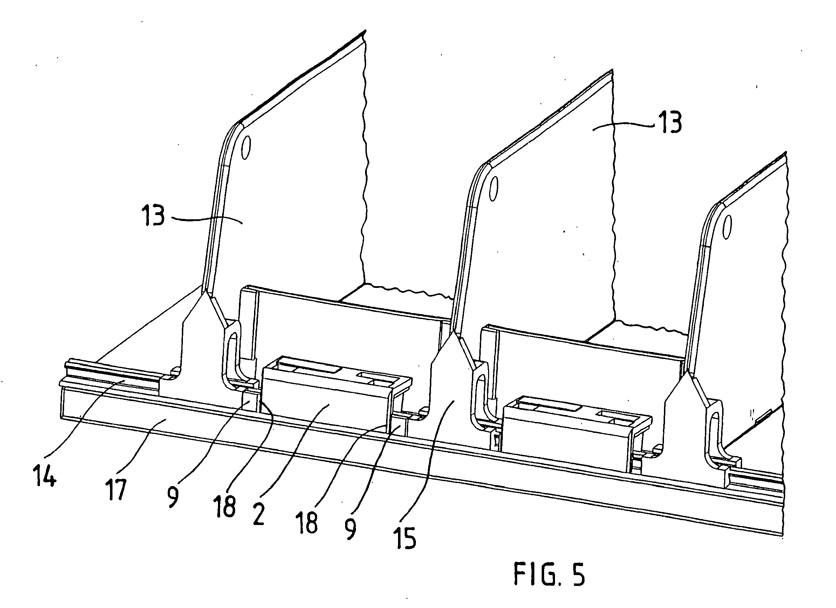

- Fig. 5: eine 3-D-Ansicht benachbarter Frontanker von Wartenschiebern und Fachteilern im Montagezustand auf einem Regalboden.

Die Warenpräsentationsvorrichtung besteht aus einem Warenschieber 16 mit einem Warenschiebergehäuse 1 mit einer Schubplatte 7 und einer im Warenschiebergehäuse 1 aufgewickelt angeordneten Zugfeder 12, welche an einem Federauslass 3 austritt und in ihrem vorderen Bereich an einem Frontanker 2 festgelegt ist, wobei der Frontanker 2 einen in Richtung des Federauslasses 3 des Warenschiebergehäuses 1 abfallenden Keil 10 aufweist, der in einem warenverpackungsfreien Zustand des Warenschiebers 16 in den Federauslass 3 eingreift und das Warenschiebergehäuse 1 in einer aufrechten Position hält.

Auf der mit einer Abschrägung 8 versehenen Schubplatte 7 ist eine Labelhalterung 5 aus einem klarsichtigen Kunststoffprofil aufgeschoben und hält ein darin angeordnetes Label 6, sodass beispielsweise bei einer Verwendung des Labels 6 der in dem Warenschieber 16 zu präsentierenden Ware die Nachbestückung mit den richtigen Waren wesentlich vereinfacht wird. Das Profil des Labelhalters 5, welches die Schubplatte 7 vorne, seitlich und Teilbereiche der seitlichen Rückseite umschließt, weist sich nach hinten erstreckende C-Profil-förmige Ausformungen 11 auf, die zum einen der Steigerung der Stabilität der Labelhalterung 5 dienen ebenso wie sie dazu verwendet werden können von oben weiteren Funktionsteile in die Profile einzuschieben.

Die Schubplatte 7 des Warenschiebers 16 kann mit oder ohne Labelhalterung 5 ausgebildet sein. Die Frontanker 2 des Warenschiebers 16 und/oder, wie zeichnerisch nicht dargestellt, die Frontanker 15 der Fachteiler 13, sind mit sich seitlich erstreckenden Distanzhaltern ausgestattet, sodass eine Mindestfachbreite festgelegt werden kann.

Zwischen einem Frontanker 2;15 und einem Distanzhalter 9 und/ oder in einem einzelnen Distanzhalter 9 sind Sollbruchstellen 18 vorgesehen, sodass ein Distanzhalter 9 oder ein Teil davon leicht abtrennbar ausgebildet ist und schmalere Mindestfachbreiten herstellbar werden können.

## Patentansprüche

1. Warenpräsentationsvorrichtung mit einem für die Bewegung des Warenschiebers führungsschienenfreien Warenschieber (16) für auf einem Regalboden (17) hintereinander gestapelte Warenverpackungen mit einem Warenschiebergehäuse (1) mit einer darin aufgerollt und aus einem Federauslass (3) ausziehbar gelagertern Zugfeder (12) und einer Schubplatte (7) und mit einem Frontanker (2) zur Fixierung an einer Frontschiene oder Frontsicke eines Regalbodens (17), an dem das vordere Ende der Zugfeder (12) festgelegt ist, wobei die Schubplatte (7) des Warenschiebers (16) labelhalterungsfrei oder mit einer Labelhalterung (5) aus klarsichtigem Material ausgestattet ist, hinter dem ein Label (6) einsetzbar ist, **dadurch gekennzeichnet, dass** sich vom Frontanker (2) und/ oder vom Warenschiebergehäuse (1) ein Fortsatz in Richtung des anderen Hauptbestandteils des Warenschiebers, dem Warenschiebergehäuse (1) den Frontanker (2) erstreckt und dass dort eine Aufnahme für den Fortsatz angeordnet ist, in die dieser im warenverpackungsfreien Zustand des Warenschiebers (16) eingreift und der dass Warenschiebergehäuse (1) in einer gewünschten Position hält.

2. Warenpräsentationsvorrichtung nach Anspruch 1, **dadurch gekennzeichnet, dass** die Labelhalterung (5) des Warenschiebers (16) die nach vorn gerichtete Seite der Schubplatte (7) überdeckt und rechts und linksseitig umgreift und von oben auf dieser aufgeschoben ist.

3. Warenpräsentationsvorrichtung nach einem der vorgenannten Ansprüche, **dadurch gekennzeichnet, dass** die Labelhalterung (5) des Warenschiebers (16) aus einem Profilabschnitt aus zumindest teilweise durchsichtigem Kunststoff besteht.

4. Warenpräsentationsvorrichtung nach einem der vorgenannten Ansprüche, **dadurch gekennzeichnet, dass** die Labelhalterung (5) des Warenschiebers (16) nach hinten gerichtete C-Profil-förmige Ausnehmungen (11) als Verstärkungen und/ oder Aufnahmen für weiteres Zubehör der Warenpräsentation, der Sicherheit oder der Revision aufweist.

5. Warenpräsentationsvorrichtung nach einem der vorgenannten Ansprüche, **dadurch gekennzeichnet, dass** die Schubplatte (7) des Warenschiebers (16) an ihrem oberen Ende eine Abschrägung (8) als Montagehilfe aufweist.

6. Warenpräsentationsvorrichtung nach einem der vorgenannten Ansprüche, **dadurch gekennzeichnet, dass** der Fortsatz als Zunge (4) am Frontanker (2) ausgebildet ist und dass als Aufnahme der Federauslass (3) des Warenschiebergehäuses (1) fungiert.

7. Warenpräsentationsvorrichtung nach Anspruch 6, **dadurch gekennzeichnet, dass** an der Zunge (4) ein Keil (10) angeordnet ist, welcher größer ist als der Federauslass (3) hoch.

8. Warenpräsentationsvorrichtung nach einem der vorgenannten Ansprüche, **dadurch gekennzeichnet, dass** die Schubplatte (7) des Warenschiebers (16) mit oder ohne Labelhalterung (5) ausgebildet ist und dass die Frontanker (2) des Warenschiebers (16) und/ oder die Frontanker (15) der Fachteiler (13) mit sich seitlich erstreckenden Distanzhaltern ausgestattet sind, sodass eine Mindestfachbreite festgelegt ist.

9. Warenpräsentationsvorrichtung nach Anspruch 8, **dadurch gekennzeichnet, dass** zwischen einem Frontanker (2;15) und einem Distanzhalter (9) und/ oder im einem einzelnen Distanzhalter (9) Sollbruchstellen (18) angeordnet und ein Distanzhalter (9) oder Teile von diesem leicht abtrennbar ausgebildet sind, sodass eine schmalere Mindestfachbreite herstellbar ist.

## Claims

1. A device for displaying goods comprising a guide rail-free goods slide (16) for moving the goods slide for product packaging stacked behind one another on a shelf base (17) comprising a good slide housing (1) comprising a tension spring (12), which is supported therein so as to be rolled up and so as to be capable of being pulled out of a spring outlet (3), and a push plate (7) and comprising a front anchor (2) for fixing to a front rail or front seam of a shelf base (17), to which the front end of the tension spring (12) is fixed, wherein the push plate (7) of the goods slide (16) is without a label fastener or is equipped with a label fastener (5) made of see-through material, downstream of which a label (6) can be inserted, **characterized in that** an appendage extends from the front anchor (2) and/or from the goods slide housing (1) in the direction of the other main component of the goods slide, the goods slide housing (1) or the front anchor (2), respectively, and that an accommodation for the appendage is arranged there, with which said appendage engages when the goods slide (16) is in the unpackaged state of the goods and which holds the good slide housing (1) in a desired position.

2. The device for displaying goods according to claim 1, **characterized in that** the label fastener (5) of the goods slide (16) covers the side of the push plate (7), which is oriented forwards and which encompasses it on the right side and on the left side and which is slid thereon from the top.

3. The device for displaying goods according to one of the afore-mentioned claims, **characterized in that** the label fastener (5) of the goods slide (16) consists of a profile section of at least partially transparent synthetic material.

4. The device for displaying goods according to one of the afore-mentioned claims, **characterized in that** the label fastener (5) of the goods slide (16) encompasses C-profile-shaped recesses (11) oriented backwards as reinforcements and/or accommodations for further accessories for the displaying of goods, for safety or for the inspection.

5. The device for displaying goods according to one of the afore-mentioned claims, **characterized in that** the push plate (7) of the goods slide (16) encompasses a beveling (8) as assembly aid at its upper end.

6. The device for displaying goods according to one of the afore-mentioned claims, **characterized in that** the appendage is embodied as guide (4) on the front anchor (2) and that the spring outlet (3) of the goods slide housing (1) acts as accommodation.

7. The device for displaying goods according to claim 8, **characterized in that** a wedge (10), which is greater than the spring outlet (3), is arranged on the guide (4).

8. The device for displaying goods according to one of the afore-mentioned claims, **characterized in that** the push plate (7) of the goods slide (16) is embodied with or without label fastener (5) and that the front anchors (2) of the goods slide (16) and/or the front anchors (15) of the shelf dividers (13) are equipped with laterally extending spacers, so that a minimum shelf width is established.

9. The device for displaying goods according to claim 8, **characterized in that** predetermined breaking points (18) are arranged between a front anchor (2; 15) and a spacer (9) and/or in a single spacer (9) and **in that** one spacer (9) or parts thereof are embodied so as to be easily detachable, so that a narrower minimum shelf width can be established.

## Revendications

1. Dispositif de présentation de produits avec un poussoir à produits (16) exempt de glissière de guidage pour le déplacement du poussoir à produits, pour des emballages de produits empilés sur un fond de rayonnage (17) avec un boîtier de poussoir à produits (1) avec un ressort de rappel (12) enroulé dans ce dernier et extractible d'une sortie de ressort (3) et avec une plaque de poussée (7) et avec une ancre frontale (2) à fixer sur une glissière frontale ou collet frontal d'un fond de rayonnage (17), sur laquelle est fixée l'extrémité antérieure du ressort de rappel (12), la plaque de poussée (7) du poussoir à produits (16) étant exempte de porte-étiquette ou munie d'un porte-étiquette (5) en matière transparente derrière lequel est insérable une étiquette (6), **caractérisé en ce qu'**à partir de l'ancre frontale (2) et/ou à partir du boîtier de poussoir à produits (1) un prolongement s'étend en direction de l'autre élément principal du poussoir à produits, du boîtier de poussoir à produits (1) ou de l'ancre frontale (2) et **en ce qu'**un logement pour le prolongement y est disposé, dans lequel celui-ci s'engage lorsque le poussoir à produits (16) n'est pas pourvu d'un emballage de produit et qui maintient le boîtier de poussoir à produits (1) dans une position souhaitée.

2. Dispositif de présentation de produits selon la revendication 1, **caractérisé en ce que** le porte-étiquette (5) du poussoir à produits (16) recouvre la face dirigée vers l'avant de la plaque de poussée (7) et l'entoure du côté droit et du côté gauche et **en ce qu'**il est emboîté par le dessus sur cette dernière.

3. Dispositif de présentation de produits selon l'une quelconque des revendications précédemment citées, **caractérisé en ce que** le porte-étiquette (5) du poussoir à produits (16) consiste dans un tronçon de profilé en matière plastique au moins partiellement transparente.

4. Dispositif de présentation de produits selon l'une quelconque des revendications précédemment citées, **caractérisé en ce que** le porte-étiquette (5) du poussoir à produits (16) comporte des évidements (11) en forme de profilé en C dirigés vers l'arrière faisant office de renforts et/ou de logements pour des accessoires supplémentaires de présentation de produits, des accessoires de sécurité ou des accessoires d'inspection.

5. Dispositif de présentation de produits selon l'une quelconque des revendications précédemment citées, **caractérisé en ce que** la plaque de poussée (7) du poussoir à produits (16) comporte sur son extrémité supérieure un chanfrein (8) faisant office d'auxiliaire de montage.

6. Dispositif de présentation de produits selon l'une quelconque des revendications précédemment citées, **caractérisé en ce que** le prolongement est conçu sous la forme d'une languette (4) sur l'ancre frontale (2) et **en ce que** la sortie de ressort (3) du boîtier de poussoir à produits (1) fait office de logement.

7. Dispositif de présentation de produits selon la revendication 6, **caractérisé en ce que** sur la languette (4) est disposée une clavette (10) dont la taille est supérieure à la hauteur de la sortie de ressort (3).

8. Dispositif de présentation de produits selon l'une quelconque des revendications précédemment citées, **caractérisé en ce que** la plaque de poussée (7) du poussoir à produits (16) est conçue avec ou sans porte-étiquette (5) et **en ce que** l'ancre frontale (2) du poussoir à produits (16) et/ou l'ancre frontale (15) des séparateurs de compartiments (13) est munie d'écarteurs s'étendant latéralement, de sorte à définir une largeur minimale de compartiment.

9. Dispositif de présentation de produits selon la revendication 8, **caractérisé en ce qu'**entre une ancre frontale (2 ; 15) et un écarteur (9) et/ou dans un écarteur (9) individuel sont disposés des points de rupture (18) et **en ce qu'**un écarteur (9) ou des parties de ce dernier sont conçus pour être facilement séparables, pour permettre d'obtenir une largeur minimale de compartiment plus étroite.
